# EUROPEAN PATENT APPLICATION

(11) **EP 4 349 154 A1**
(43) Date of publication of application: **10.04.2024**
(21) Application number: 21947443.4
(22) Date of filing: 29.06.2021
(51) Int. Cl.: A01D 43/063, A01D 34/63

(54) **LAWN MOWER**

(71) Applicant: Greenworks (Jiangsu) Co., Ltd., Changzhou, Jiangsu 213023 (CN)
(72) Inventor: KAMO, Keita, Ohme-shi, Tokyo 198--8760 (JP); MIYANISHI, Tomohiro, Ohme-shi, Tokyo 198--8760 (JP); FENG, Shouchuan, hangzhou, Jiangsu 213023 (CN)
(74) Representative: Bergenstråhle & Partners AB
(86) International application number: PCT/CN2021/103074
(87) International publication number: WO 2023/272483

(57) **Abstract**

The disclosure provides a lawn mower. The lawn mower includes a main body portion and a lawn collecting container. The main body portion can move forwards, the lawn collecting container is arranged at a rear of the main body portion, and the lawn collecting container is connected with the main body portion in a form of being freely disassembled and assembled relative to the main body portion. A cylindrical housing part is formed on the main body portion, the housing part is provided with an opening at a bottom part of the main body portion, and a mowing blade is housed in the housing part. When the lawn collecting container is removed from the main body portion and the main body portion is vertical with a rear part of the main body portion is configured as a lower side, the lawn collecting container is capable of being mounted to the bottom part of the main body portion, at least part of the lawn collecting container enters the housing part from the bottom part of the main body portion, and an inner surface of the housing part is capable of supporting the lawn collecting container. Accordingly, in the state that the main body portion is in vertical direction, the lawn collecting container can be stably mounted at the bottom part of the main body portion, so that safe and compact storage can be achieved.

## Description

### TECHNICAL FIELD

The disclosure relates to a lawn mower.

### BACKGROUND

The walk-behind lawn mowers for cutting lawn on the ground are provided with a main body portion, a handle and a lawn collecting container. The main body portion may move forward. The handle extends from the main body portion to the rear. The lawn collecting container is connected with the rear of the main body portion, and a mowing blade is provided at the bottom of the main body portion.
Further, the lawn mower can use the mowing blade to mow by driving the mowing blade while enabling the main body portion and the lawn collecting container to move forward. In addition, the mowed lawn is fed into the lawn collecting container from the main body portion.

A kind of lawn mower can fold the handle back to the top side of the main body portion, and the lawn collecting container is freely disassembled and assembled relative to the main body portion (for example, please refer to patent reference 1).
In this kind of lawn mower, the handle can be folded back relative to the main body portion, and the lawn collecting container can be removed from the main body portion, so that the main body portion can be stored in an upright state. In addition, when the main body portion is in vertical direction, the lawn collecting container can be used to cover the mowing blade through overlapping the bottom of the main body portion with the bottom of the lawn collecting container.

### [Prior art]

### [Patent reference]

Patent reference 1: JP Patent Application Publication No. 2007-116954

### SUMMARY

### [Technical problems that the disclosure need to be solved]

In the lawn mowers of the conventional art, since the lawn collecting container is hooked on the upper part of the vertical main body portion, so that the lawn collecting container is suspended in the main body portion, there is a problem that the lawn collecting container becomes unstable during storage.

The disclosure provides a lawn mower that can stably mount the lawn collecting container at a bottom part of the vertical main body portion, so that it can be safely and compactly stored.

### [Technical solutions for solving technical problems]

The disclosure provides a lawn mower. The lawn mower is provided with a main body portion and a lawn collecting container. Wherein, the main body portion can move forward. The lawn collecting container is arranged at a rear of the main body portion, and the lawn collecting container is connected with the main body portion in a way that is freely disassembled and assembled relative to the main body portion. A cylindrical housing part is arranged on the main body portion with an opening at a bottom of the main body portion, and a mowing blade is housed in the housing part. In a state that the lawn collecting container is removed from the main body portion, and a rear part of the main body portion is configured as a lower side to enable the main body portion to be in vertical direction, the lawn collecting container can be mounted to the bottom of the main body portion. In addition, at least a part of the lawn collecting container enters the housing part from the bottom of the main body portion, so that the lawn collecting container can be supported by an inner surface of the housing part.

### [Technical effect]

The lawn mower of the disclosure is capable of mounting the lawn collecting container to the bottom of the vertical main body portion for storage. At this time, through enabling the lawn collecting container to enter the housing part of the main body portion, the lawn collecting container can be stable relative to the main body portion, and compactly connected with the main body portion. In addition, through enabling the lawn collecting container to enter the housing part of the main body portion, the lawn collecting container can be used to cover the mowing blade, thereby improving a safety of storage.

In this way, the lawn mower of the disclosure can stably mount the lawn collecting container to the bottom of the vertical main body portion, so that it can be safely and compactly stored.

### BRIEF DESCRIPTION OF THE DRAWINGS

FIG. 1 is a perspective view of the lawn mower in a first embodiment of the disclosure from a top view.
FIG. 2 is a perspective view of a state of the lawn mower in the first embodiment of the disclosure before a lawn collecting container is mounted on a vertical main body portion.
FIG. 3 is a perspective view of a state of the lawn mower in the first embodiment of the disclosure with the lawn collecting container mounted on the vertical main body portion.
FIG. 4 is a perspective view of a state of the lawn mower in a second embodiment of the disclosure before the lawn collecting container is mounted on a vertical main body portion.
FIG. 5 is a perspective view of a state of the lawn mower in a third embodiment of the disclosure before the lawn collecting container is mounted on a vertical main body portion.
FIG. 6 is a perspective view of a state of the lawn mower in a fourth embodiment of the disclosure before a connecting part of the main body portion is hooked on the lawn collecting container.
FIG. 7 is a perspective view of a state of the lawn mower in the fourth embodiment of the disclosure with the connecting part of the main body portion hooked on the lawn collecting container.
FIG. 8 is a side sectional view of a state of the lawn mower in a fifth embodiment of the disclosure with an upper end part of the lawn collecting container embedded into a clamping part of the main body portion.
FIG. 9 is a perspective view of a state of the lawn mower in a sixth embodiment of the disclosure with a strap of the lawn collecting container hooked on the main body portion.
FIG. 10 is a perspective view of a state of the lawn mower in a seventh embodiment of the disclosure with a bag part of a cover of the lawn collecting container covering the main body portion.

### DETAILED DESCRIPTION

Please refer to drawings, and embodiments of the disclosure are described in detail.

Further, in a description of each embodiment, the same structural elements are marked with the same reference numerals, and duplicate descriptions are omitted.

### [First embodiment]

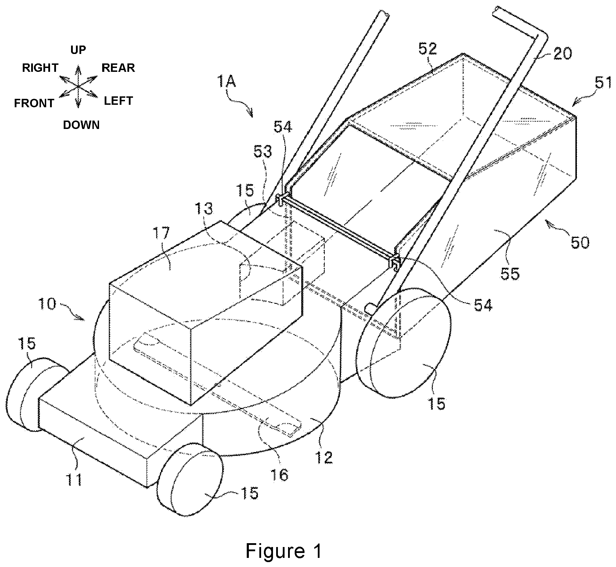

Please refer to FIG. 1. The lawn mower 1A of the first embodiment is a walk-behind machine for mowing lawns on a ground. The lawn mower 1A is provided with a main body portion 10, a handle 20 and a lawn collecting container 50. Wherein the main body portion 10 can move forward. The handle 20 is arranged at a rear part of the main body portion 10. The lawn collecting container 50 is connected with the rear part of the main body portion 10, and the interior of the main body portion 10 is communicated with the interior of the lawn collecting container 50 through a lawn discharge passage 13.

The main body portion 10 is provided with a box-shaped housing 11, four wheels 15 in front and rear, left and right directions, a mowing blade 16 and a driving motor 17. The four wheels are arranged on the housing 11. The mowing blade 16 is arranged in the housing 11. The driving motor 17 is arranged on an upper surface of the housing 11. Further, in the lawn mower 1A of the first embodiment, the motor is used as a driving source, but the driving source is not limited, for example, an engine may also be used as the driving source.

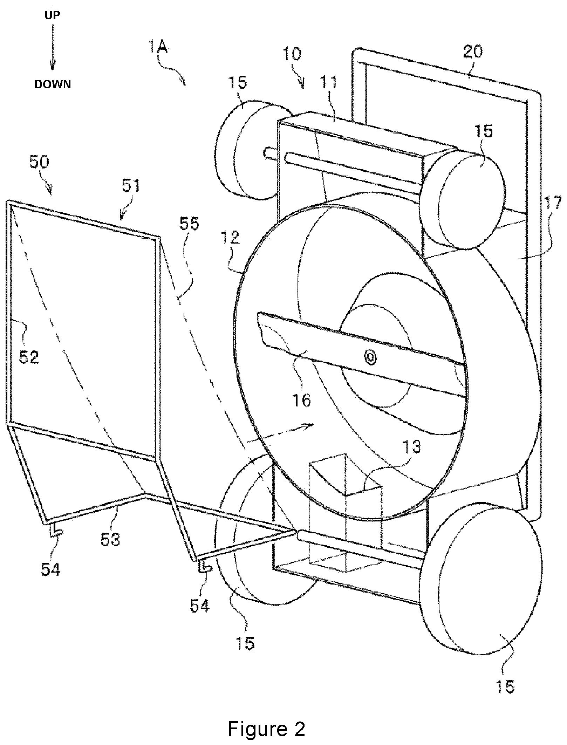

A cylindrical housing part 12 is formed inside the housing 11, and the housing part 12 has a circumferential wall part formed around an axis in up-down direction (please refer to FIG. 2). A lower end part of the housing part 12 is provided with an opening at a bottom (lower surface) of the housing 11.

A mowing blade 16 is accommodated in a lower part of the housing part 12 (please refer to FIG. 2). The mowing blade 16 of the first embodiment is a linear cutting blade extending on a radial direction of the housing part 12. The mowing blade 16 can rotate around an axis in up-down direction. In addition, a structure of the mowing blade 16 is not limited, and various mowing blades such as disc-shaped mowing blades, cross-shaped mowing blades and so on may be used.

The driving motor 17 is a driving source that enables the mowing blade 16 and a fan (not shown) arranged in the housing 11 to rotate.

The mowing blade 16 is rotated in the housing part 12 by the driving motor 17. In addition, the fan is rotated by the driving motor 17, and lawn cut by the mowing blade 16 is discharged backward from the housing 11.

The handle 20 is a U-shaped rod component extending obliquely upwards from the rear part of the main body portion 10. Two end parts of handle 20 are connected with the rear part of the main body portion 10. Through pushing the handle 20 by an operator, the lawn mower 1A can be moved.

The handle 20 can be folded back to a top (upper) part of the main body portion 10 so as to overlap with the top part of the main body portion 10 (please refer to FIG. 2).

In addition, a structure of the handle 20 is not limited to a U-shape, and various shapes such as T-shaped, L-shaped and so on may be applied, as long as a shape can enable the handle 20 to be folded back to the top of the main body portion 10 and overlap with the top of the main body portion 10.

When the lawn mower 1A is operating, the lawn collecting container 50 is a container of a substantially rectangular arranged behind the main body portion 10. The lawn collecting container 50 is provided with a frame 51 and a cover 55 covering the frame 51.

The frame 51 is provided with an upper frame part 52, a front frame part 53 and hooks 54, 54. The upper frame part 52 constitutes an outer edge of an upper surface of the lawn collecting container 50. The front frame part 53 constitutes an outer edge of a front surface of the lawn collecting container 50. The hooks 54 are used for left and right connections, and are arranged on the front frame part 53.

The hooks 54, 54 for the left and right connections are respectively arranged on left and right edges of the front frame part 53 and protrude forward. A front part of the hook 54 for connection is bent downwards.

The cover 55 is a substantially rectangular bag body made of cloth covering the frame 51. An upper part of the cover 55 is supported by the upper frame part 52 of the frame 51, and a front part of the cover 55 is supported by the front frame part 53 of the frame 51. The front part of the cover 55 is an opening.

Left and right sides, a bottom part and a rear part of the cover 55 are not supported by the frame 51 but are suspended on the upper frame part 52 of the frame 51. In addition, the hooks 54, 54 for the left and right connections protrude forward from a front of the cover 55.

Through arranging the lawn collecting container 50 at a rear of the main body portion 10 as shown in FIG. 1, and enabling the left and right hooks 54, 54 for connections to hook at the rear end part of the main body portion 10, the lawn collecting container 50 can be connected with the rear part of the main body portion 10.

Through enabling the lawn mower 1A to move forward by the operator by pushing the handle 20 while rotating the mowing blade 16, the lawn mower 1A can use the mowing blade 16 to mow the lawn on the ground. In addition, the mowed lawn by the mowing blade 16 is discharged rearward from the main body portion 10 and housed in the lawn collecting container 50.

When the lawn mower 1A is stored, the lawn collecting container 50 is removed from the main body portion 10. In addition, the handle 20 is folded back to the top (upper) part of the main body portion 10 so as to overlap with the top part of the main body portion 10.

Then, please refer to FIG. 2. The main body portion 10 is in vertical direction in a form that the rear part of the main body portion 10 is configured as a lower side and a front part of the main body portion 10 is configured as an upper side. Accordingly, a bottom of the main body portion 10 is exposed laterally.

The lawn collecting container 50 removed from the main body portion 10 is arranged in a form that the front part of the lawn collecting container 50 is configured as the lower side and the rear part of the lawn collecting container 50 is configured as the upper side. And, a bottom of the lawn collecting container 50 is enabled to be opposite the bottom of the vertical main body portion 10.

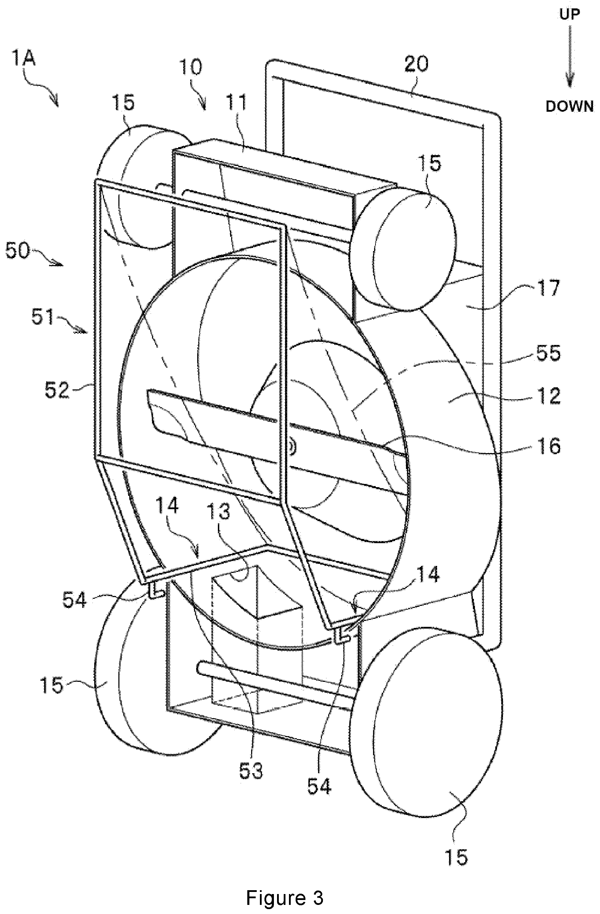

Then, please refer to FIG. 3. The bottom of the lawn collecting container 50 is arranged into the housing part 12 of the main body portion 10, and the front frame part 53 of the frame 51 of the lawn collecting container 50 is arranged on a lower part of an inner surface of the housing part 12. In addition, the hooks 54, 54 for the connections are arranged outside the housing part 12.

Accordingly, a part of the lawn collecting container 50 becomes embedded in the housing part 12 of the main body portion 10, and a lower part of the lawn collecting container 50 is supported by two supporting parts 14, 14 arranged on the inner surface of the housing part 12 of the main body portion 10.

The supporting part 14 of the first embodiment is part of the inner surface of the housing part 12. The two supporting parts 14, 14 are arranged on left and right sides of the mowing blade 16 with the mowing blade 16 interposed therebetween. In addition, in the first embodiment, the two supporting parts 14, 14 are the same structure (curved shape), but the two supporting parts 14, 14 may also be structures that are different from each other.

Please refer to FIG. 3. In the lawn mower 1A such as the above, the lawn collecting container 50 can be removed from the main body portion 10, which enables the main body portion 10 to be in vertical direction, and the lawn collecting container 50 is mounted at the bottom of the main body portion 10.

At this time, since the part of the lawn collecting container 50 enters the housing part 12 of the main body portion 10, the lawn collecting container 50 is supported on the inner surface of the housing part 12, and the lawn collecting container 50 can be stable relative to the main body portion 10.

In the lawn mower 1A of the first embodiment, since two points at a lower end part of the lawn collecting container 50 are supported by two supporting parts 14, 14 arranged at the lower end part of the housing part 12 with the mowing blade 16 interposed therebetween, a stability can be improved compared with a case when the lawn collecting container 50 is supported by one point. Accordingly, even if the lawn mower 1A is shaken during storage, the mowing blade 16 is not easily exposed to an outside because the lawn collecting container 50 is not easily displaced relative to the housing part 12.

In addition, through enabling a part of the lawn collecting container 50 to enter the housing part 12 of the main body portion 10, the main body portion 10 and the lawn collecting container 50 can be connected compactly, so that a storage space may be reduced.

In addition, through enabling the lawn collecting container 50 to overlap with a bottom part of the main body portion 10 and enabling a part of the lawn collecting container 50 to enter the housing part 12, the lawn collecting container 50 can be used to cover the mowing blade 16. Accordingly, it can prevent the mowing blade 16 from being exposed to the outside when keeping the lawn mower 1A in storage position.

In addition, in FIG. 3, in order to clarify a mounting state of the frame 51 of the lawn collecting container 50 and the main body portion 10, the cover 55 is represented by an imaginary line. Therefore, in FIG. 3, although the mowing blade 16 is visible from the outside, the mowing blade 16 is actually covered by frame 51 and cover 55.

In this way, the lawn collecting container 50 can be stably mounted to the bottom part of the vertical main body portion 10 of the lawn mower 1A, so that it can be safely and compactly stored.

The first embodiment of the disclosure is described above, but the disclosure is not limited to the first embodiment and can be appropriately modified within a scope of not departing from its main purpose.

In the lawn mower 1A of FIG. 1, shapes of the main body portion 10 and the lawn collecting container 50 are not limited. In addition, shapes of the mowing blade 16 and the driving motor 17 are also not limited.

Please refer to FIG. 3. The lawn mower 1A of the first embodiment is configured such that a part of the lawn collecting container 50 enters the housing part 12 of the main body portion 10, but the entire lawn collecting container 50 may enter the housing part 12.

In addition, the lawn mower may also be configured such that, an elastic component such as a rubber plate is attached to the supporting part 14 that is of an the inner surface of the housing part 12 of the main body portion 10 and that is in contact with outer surface of the lawn collecting container 50 on.

In addition, the lawn mower may also be configured such that an elastic component such as a rubber plate is attached to a part that is of an outer surface of the cover 55 of the lawn collecting container 50 and that is in contact with the supporting part 14 on the inner surface of the housing part 12 of the main body portion 10, or a friction coefficient of this part is increased.

By adopting these structures, the stability of the lawn collecting container 50 that is mounted on the vertical main body portion 10 can be improved.

### [Second embodiment]

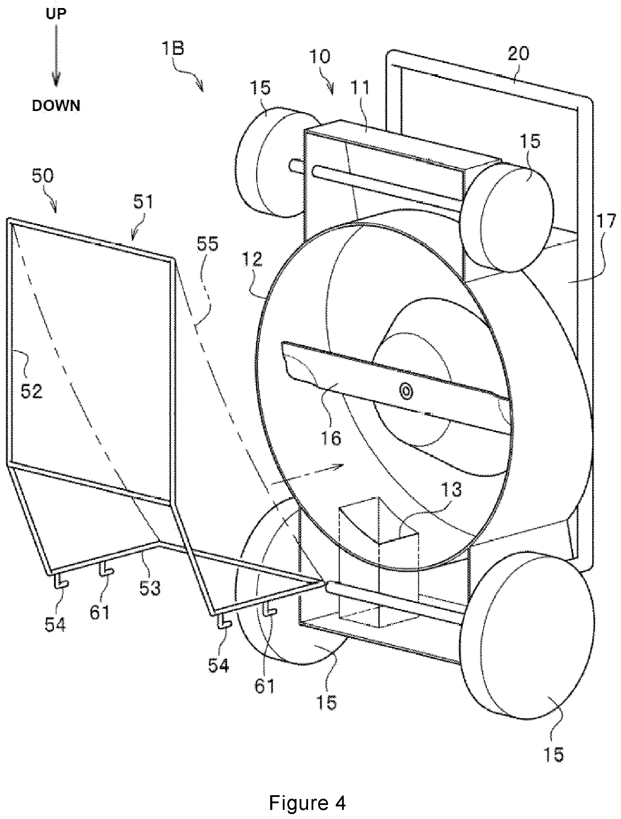

The second embodiment of the disclosure is described in detail with appropriate reference to the accompanying drawings. Please refer to FIG. 4. A lawn mower 1B of the second embodiment is substantially the same structure as the lawn mower 1A (please refer to FIG. 2) of the first embodiment, and a difference is that an engagement part 61 is arranged on the lawn collecting container 50.

The engagement part 61 is a hook on the front frame part 53 of the frame 51 of the lawn collecting container 50. In the second embodiment, two left and right engagement parts 61, 61 are arranged on the front frame part 53.

When the lawn mower 1B of the second embodiment is stored, the main body portion 10 is in vertical direction, and the lawn collecting container 50 is mounted to the bottom part of the main body portion 10. At this time, the circumferential wall part of the housing part 12 of the main body portion 10 is clamped by the front frame part 53 and the two engagement parts 61, 61, whereby the lower part of the lawn collecting container 50 is fixed to the main body portion 10, therefore, the lawn collecting container 50 may be stable relative to the main body portion 10.

The second embodiment of the disclosure is described above, but the disclosure is not limited to the second embodiment. Like the first embodiment, the disclosure can be appropriately modified within the scope of not departing from its main purpose.

For example, a number and configuration of the engagement part 61 are not limited, and it can be appropriately configured according to a size, shape of the lawn collecting container 50 and the main body portion 10.

### [Third embodiment]

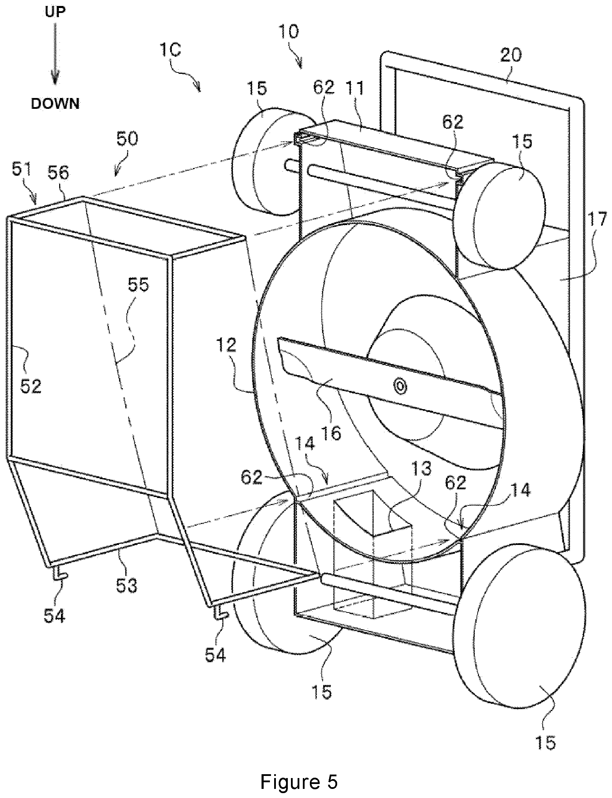

Please refer to drawings, and the third embodiment of the disclosure is described in detail. Please refer to FIG. 5. A lawn mower 1C of the third embodiment is roughly the same structure as the lawn mower 1A (please refer to FIG. 2) of the first embodiment, and a difference is that a clamping part 62 is arranged on the main body portion 10.

The clamping part 62 of the third embodiment is a groove-shaped step part formed on an inner surface of the housing 11. In the third embodiment, two left and right clamping parts 62, 62 are formed on an inner surface of a front end part of the housing 11, and the two left and right clamping parts 62, 62 are formed on the left and right supporting parts 14, 14 on the inner surface of the housing part 12. The clamping part 62 extends in a straight line from an opening edge of a bottom part side toward a top part side.

Each clamping part 62 is formed such that it is configured to be arranged at four parts on the upper, lower, left and right sides of the inner surface of the housing 11 when the main body portion 10 is in vertical direction.

In addition, a rear frame part 56 constituting an outer edge of the rear part is provided on the frame 51 of the lawn collecting container 50 of the third embodiment.

When the lawn mower 1C of the third embodiment is stored, the main body portion 10 is in vertical direction, and the lawn collecting container 50 is mounted to the bottom part of the main body portion 10. At this time, left and right edges of the front frame part 53 of the lawn collecting container 50 are inserted into the left and right clamping parts 62, 62 on a lower side of the housing 11, and left and right edges of the rear frame part 56 are inserted into the left and right clamping parts 62, 62 on an upper side of the housing 11.

Accordingly, the upper and lower parts of the lawn collecting container 50 are clamped with the housing 11 of the main body portion 10, so that the lawn collecting container 50 can be stabilized relative to the main body portion 10.

The third embodiment of the disclosure is described above, but the disclosure is not limited to the third embodiment. Like the first embodiment, the disclosure can be appropriately modified within the scope of not departing from its main purpose.

For example, a number and configuration of the clamping part 62 are not limited, and it can be appropriately configured according to a size, shape of the lawn collecting container 50 and the main body portion 10.

### [Fourth embodiment]

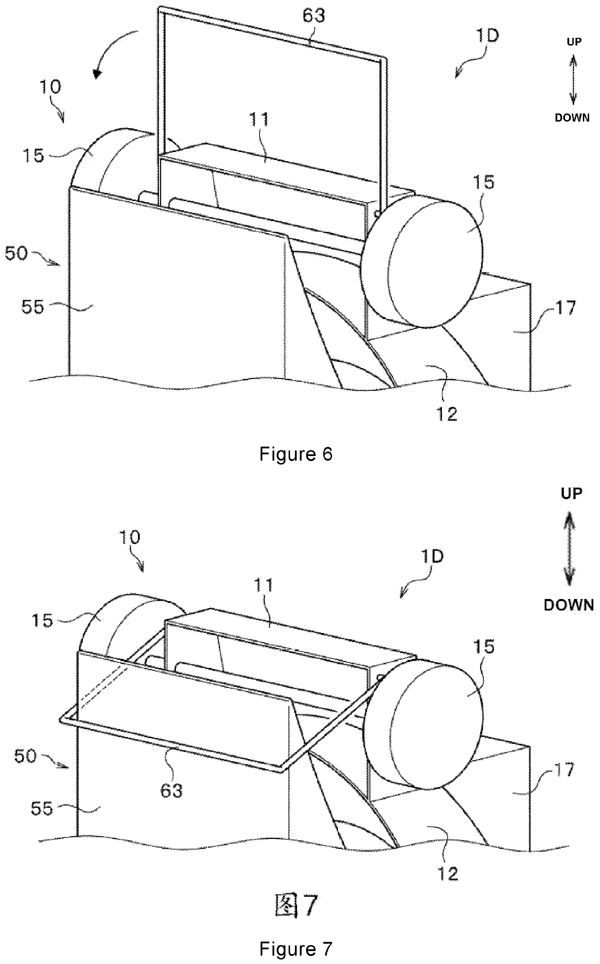

Please refer to drawings, and the fourth embodiment of the disclosure is described in detail. Please refer to FIG. 7. A lawn mower 1D of the fourth embodiment is roughly the same structure as the lawn mower 1A (please refer to FIG. 2) of the first embodiment, and a difference is that a connecting part 63 is arranged on the main body portion 10.

Please refer to FIG. 6. The connecting part 63 is arranged at the front end part of the main body portion 10. The connecting part 63 is a rod component bent into a U-shape. Two end parts of connecting part 63 are connected with the front end part of the main body portion 10, and protrude forward. The connecting part 63 plays the role of a bumper, and the bumper is used for preventing an obstacle from touching the main body portion 10 when the main body portion 10 is moved forward. In addition, the two ends of the connecting parts 63 are connected with left and right side surfaces of the front end part of the main body portion 10, with the connecting part as a center of rotation, and the connecting part 63 may freely tilt to a bottom part side of the main body portion 10.

When the lawn mower 1D of the fourth embodiment is stored, the main body portion 10 is in vertical direction, and the lawn collecting container 50 is mounted to the bottom part of the main body portion 10. Then, please refer to FIG. 7. The connecting part 63 is placed down to the bottom part side of the main body portion 10, so that the connecting part 63 is hooked on an upper part of the lawn collecting container 50. In this way, in addition to fixing the lawn collecting container 50 by abutting against the inner surface of the housing part 12 of the main body portion 10, the upper part of the lawn collecting container 50 may be connected with the main body portion 10 through the connecting part 63 arranged at an upper part of the main body portion 10, so that the lawn collecting container 50 is more stable relative to the main body portion 10.

In addition, the lawn collecting container 50 is fixed to the upper part of the main body portion 10 by the connecting part 63, and is fixed to a lower part of the main body portion 10 by abutting against the inner surface of the housing part 12. In this way, upper and lower fixing parts are arranged across the mowing blade 16. Through this structure, the lawn collecting container 50 is stably fixed to the main body portion 10 in any direction from up and down, left and right, so that the lawn collecting container 50 can be prevented from displacing relative to the main body portion 10, which may effectively prevent the mowing blade 16 from being exposed to the outside.

In addition, since the upper part of the lawn collecting container 50 is surrounded and held by the connecting part 63 arranged at the upper part of the main body portion 10, the lawn collecting container 50 can be prevented from displacing or falling off relative to the main body portion 10 even when the main body portion 10 is shaking or tilting in multiple directions.

The fourth embodiment of the disclosure is described above, but the disclosure is not limited to the fourth embodiment. Like the first embodiment, the disclosure can be appropriately modified within the scope of not departing from its main purpose.

For example, a shape of the connecting part 63 are not limited, and it can be appropriately configured according to a size, shape of the lawn collecting container 50 and the main body portion 10.

### [Fifth embodiment]

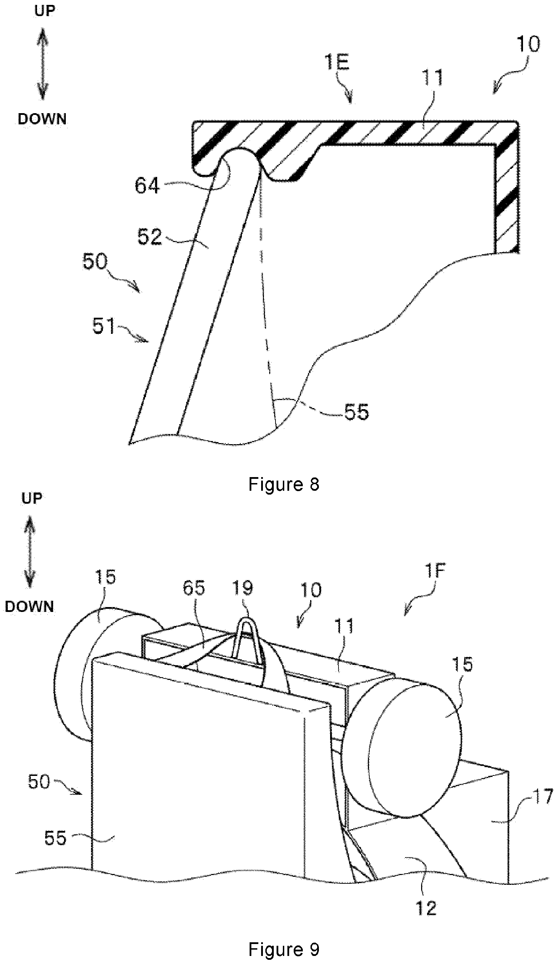

Please refer to drawings, and the fifth embodiment of the disclosure is described in detail. Please refer to FIG. 8. A lawn mower 1E of the fifth embodiment is roughly the same structure as the lawn mower 1A (please refer to FIG. 2) of the first embodiment, and a difference is that a clamping part 64 is arranged on the main body portion 10.

The clamping part 64 of the fifth embodiment is a concave groove formed on the inner surface of the housing 11 of the main body portion 10. The clamping part 64 extends in a straight line in a left-right direction of the main body portion 10.

When the lawn mower 1E of the fifth embodiment is stored, the main body portion 10 is in vertical direction, and the lawn collecting container 50 is mounted to the bottom part of the main body portion 10. Accordingly, rear edge parts of the upper frame part 52 of the lawn collecting container 50 are clamped into the clamping part 64 of the main body portion 10, so that the lawn collecting container 50 can be stabilized relative to the main body portion 10.

In addition, the lawn collecting container 50 of the fifth embodiment is fixed to the upper part of the main body portion 10 by the clamping part 64, and is fixed to the lower part of the main body portion 10 by abutting against the inner surface of the housing part 12. In this way, upper and lower fixing parts are arranged across the mowing blade 16. Through this structure, the lawn collecting container 50 is stably fixed to the main body portion 10 in any direction from up and down, left and right, so that the lawn collecting container 50 can be prevented from displacing relative to the main body portion 10, which may effectively prevent the mowing blade 16 from being exposed to the outside.

The fifth embodiment of the disclosure is described above, but the disclosure is not limited to the fifth embodiment. Like the first embodiment, the disclosure can be appropriately modified within the scope of not departing from its main purpose.

### [Sixth embodiment]

Please refer to drawings, and the sixth embodiment of the disclosure is described in detail. Please refer to FIG. 9. A lawn mower 1F of the sixth embodiment is roughly the same structure as the lawn mower 1A (please refer to FIG. 2) of the first embodiment, and a difference is that a strap65 is arranged on the lawn collecting container 50.

The strap 65 with both ends mounted on the cover 55 is provided at a rear end part of the cover 55 of the lawn collecting container 50 of the sixth embodiment. Then, when the main body portion 10 is in vertical direction and the lawn collecting container 50 is mounted at the bottom part of the main body portion 10, the strap 65 is hooked on a hook 19 arranged at the front end part of the main body portion 10, so that the lawn collecting container 50 can be stabilized relative to the main body portion 10.

In addition, the lawn collecting container 50 of the sixth embodiment is fixed to the upper part of the main body portion 10 by the strap 65, and is fixed to the lower part of the main body portion 10 by abutting against the inner surface of the housing part 12. In this way, upper and lower fixing parts are arranged across the mowing blade 16. Through this structure, the lawn collecting container 50 is stably fixed to the main body portion 10 in any direction from up and down, left and right, so that the lawn collecting container 50 can be prevented from displacing relative to the main body portion 10, which may effectively prevent the mowing blade 16 from being exposed to the outside.

The sixth embodiment of the disclosure is described above, but the disclosure is not limited to the sixth embodiment. Like the first embodiment, the disclosure can be appropriately modified within the scope of not departing from its main purpose.

### [Seventh embodiment]

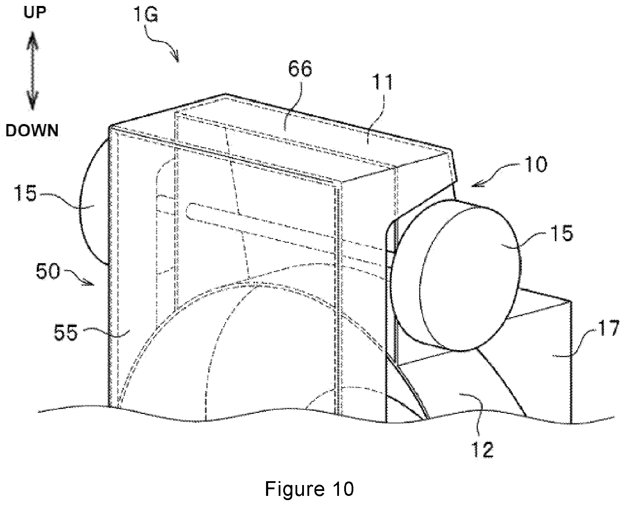

Please refer to drawings, and the seventh embodiment of the disclosure is described in detail. Please refer to FIG. 10. A lawn mower 1G of the seventh embodiment is roughly the same structure as the lawn mower 1A (please refer to FIG. 2) of the first embodiment, and a difference is that a bag part 66 is arranged on the cover 55 of the lawn collecting container 50.

The bag part 66 is provided at the rear end part of the cover 55 of the lawn collecting container 50 of the seventh embodiment. The bag part 66 may cover the upper part of the main body portion 10 when the lawn collecting container 50 is mounted at the bottom part of the main body portion 10.

In the lawn mower 1G of the seventh embodiment, when the main body portion 10 is in vertical direction and the lawn collecting container 50 is mounted at the bottom part of the main body portion 10, the bag part 66 of the cover 55 of the lawn collecting container 50 covers the upper part of the main body portion 10, so that the lawn collecting container 50 can be stabilized relative to the main body portion 10.

In addition, the lawn collecting container 50 of the seventh embodiment is fixed to the upper part of the main body portion 10 by the bag part 66, and is fixed to the lower part of the main body portion 10 by abutting against the inner surface of the housing part 12. In this way, upper and lower fixing parts are arranged across the mowing blade 16. Through this structure, the lawn collecting container 50 is stably fixed to the main body portion 10 in any direction from up and down, left and right, so that the lawn collecting container 50 can be prevented from displacing relative to the main body portion 10, which may effectively prevent the mowing blade 16 from being exposed to the outside.

In addition, since the front end part of the main body portion 10 is covered by the bag part 66 provided on the upper part of the cover 55 covers, the lawn collecting container 50 can be prevented from displacing or falling off relative to the main body portion 10 even when the main body portion 10 is shaking or tilting in multiple directions.

The seventh embodiment of the disclosure is described above, but the disclosure is not limited to the seventh embodiment. Like the first embodiment, the disclosure can be appropriately modified within the scope of not departing from its main purpose.

### BRIEF DESCRIPTION OF THE DRAWINGS

1A: lawn mower (the first embodiment); 1B: lawn mower (the second embodiment); 1C: lawn mower (the fourth embodiment); 1E: lawn mower (the fifth embodiment); 1F: lawn mower (the sixth embodiment); 1G: lawn mower (the seventh embodiment); 10: main body portion; 11: housing; 12: housing part; 15: wheel; 16: mowing blade; 17: driving motor; 19: hook; 20: handle; 50: lawn collecting container; 51: frame; 52: upper frame part; 53: front frame part; 54: hook for connection; 55: cover; 56: rear frame part; 61: engagement part; 62: clamping part (the third embodiment); 63: connecting part; 64: clamping part (the fifth embodiment); 65: strap; 66: bag part.

## Claims

1. A lawn mower, comprising:
a main body portion; and
a lawn collecting container;
wherein the main body portion is capable of moving forward,
the lawn collecting container is arranged at a rear of the main body portion,
the lawn collecting container is connected with the main body portion in a form that is freely disassembled and assembled relative to the main body portion,
a cylindrical housing part is formed on the main body portion, the cylindrical housing part is provided with an opening at a bottom part of the main body portion,
a mowing blade is housed in the housing part,
when the lawn collecting container is removed from the main body portion and the main body portion is in vertical direction with a rear part of the main body portion is configured as a lower side, the lawn collecting container is capable of being mounted to the bottom part of the main body portion,
at least part of the lawn collecting container enters the housing part from the bottom part of the main body portion, and an inner surface of the housing part is capable of supporting the lawn collecting container.

2. The lawn mower according to claim 1, wherein the lawn collecting container is provided with an engagement part, main body portion the engagement part is clamped and matched with the main body portion when the lawn collecting container is mounted at the bottom part of the main body portion.

3. The lawn mower according to claim 1, wherein the main body portion is provided with a clamping part, main body portion part of the lawn collecting container is clamped and matched with the clamping part when the lawn collecting container is mounted at the bottom part of the main body portion.

4. The lawn mower according to claim 3, wherein the clamping part is a step part forming on an inner surface of the main body portion.

5. The lawn mower according to claim 1, wherein the main body portion is provided with a connecting part, main body portion the connecting part is connected with part of the lawn collecting container when the lawn collecting container is mounted at the bottom part of the main body portion.

6. The lawn mower according to claim 1, wherein the lawn collecting container is provided with a frame and a cover covering the frame, a strap is arranged on the cover, main body portion the strap is hooked on the main body portion when the lawn collecting container is mounted at the bottom part of the main body portion.

7. The lawn mower according to claim 1, wherein the lawn collecting container is provided with a frame and a cover covering the frame, a bag part is arranged on the cover, main body portion the bag part covers an upper part of the main body portion when the lawn collecting container is mounted at the bottom part of the main body portion.

8. The lawn mower according to any one of claims 1 to 7, wherein two supporting parts configured to support the lawn collecting container are arranged on the inner surface of the housing part with the mowing blade interposed therebetween.

9. The lawn mower according to claim 8, wherein the two supporting parts are provided with different structures respectively.
